(19) Europäisches Patentamt
European Patent Office
Office européen des brevets

(11) **EP 2 425 262 B1**

(12) **FASCICULE DE BREVET EUROPEEN**

(45) Date de publication et mention de la délivrance du brevet:
**11.06.2014 Bulletin 2014/24**

(21) Numéro de dépôt: **10702295.6**

(22) Date de dépôt: **01.02.2010**

(51) Int Cl.:
***G01P 5/26*** *(2006.01)*      ***G01S 17/95*** *(2006.01)*
***G01W 1/00*** *(2006.01)*

(86) Numéro de dépôt international:
**PCT/EP2010/051187**

(87) Numéro de publication internationale:
**WO 2010/089278 (12.08.2010 Gazette 2010/32)**

(54) **SYSTEME ET PROCEDE DE DETECTION ET DE DETERMINATION D'ANOMALIES ATMOSPHERIQUES A DISTANCE**

VERFAHREN UND VORRICHTUNG ZUR FERNERFASSUNG UND -FESTSTELLUNG VON ATMOSPHÄRISCHEN ABWEICHUNGEN

METHOD AND SYSTEM FOR DETECTING AND DETERMINING ATMOSPHERIC ABNORMALITIES FROM AFAR

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **06.02.2009 FR 0900527**

(43) Date de publication de la demande:
**07.03.2012 Bulletin 2012/10**

(73) Titulaire: **THALES**
**92200 Neuilly-sur-Seine (FR)**

(72) Inventeur: **MANDLE, Jacques**
**F-07130 Saint Péray (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**FR-A- 2 870 942          GB-A- 2 176 965**
**US-A1- 2003 009 268**

• **SOREIDE D ET AL: "Coherent Lidar Turbulence Measurement for Gust Load Alleviation" NASA TECHNICAL MEMORANDUM, SCIENTIFIC AND TECHNICAL INFORMATION, HANOVER, MD, US, no. 104318, 1 août 1996 (1996-08-01), page COMPLETE18, XP002313356 ISSN: 0499-9320**

EP 2 425 262 B1

**Description**

L'invention porte sur un système et un procédé de détection et de détermination d'anomalies atmosphériques à distance, et sur un aéronef embarquant à son bord un tel système.

Il est connu des systèmes embarqués à bord d'aéronefs pour détecter des turbulences à l'avance, et ainsi éviter des conséquences dommageables à l'aéronef ou à ses occupants, comme par exemple dans le document GB2176965.

La turbulence se traduit par des variations locales brutales de vitesse et de direction du vent, qui sont à l'origine de mouvements désordonnés et non maîtrisés des avions. En effet, les mouvements d'air par rapport au sol, ou, en d'autres termes, par rapport au repère Terrestre, qu'on appelle également le vent, ne sont pas homogènes. En particulier, les hétérogénéités spatiales de vent créent des incréments d'incidence ou de dérapage générant des mouvements de l'avion.

L'évitement par l'aéronef d'une zone à risque suppose une identification et une localisation d'une zone de turbulence avec un préavis suffisant pour re-planifier la trajectoire de l'aéronef, avec accord du contrôle aérien, soit typiquement 5 minutes au minimum.

La pénétration d'une telle zone à risque nécessite des actions de commandes de vol pour préparer la traversée de la zone.

Parmi ces conséquences, la plus fréquente concerne des accidents corporels impliquant des personnes à bord de l'aéronef. Ces accidents peuvent être causés par de brusques accélérations ou rotations inopinées de l'aéronef lorsqu'il traverse une zone de turbulences. Ces accélérations peuvent entraîner, d'une part des chocs entre les personnes et des parois de l'aéronef, par exemple contre le plafond de la cabine passager lorsque les personnes ne sont pas attachées sur leur siège, et d'autre part, des percussions de personnes par des objets qui ne sont pas solidairement fixés à la structure de l'aéronef, par exemple des chariots de service. Le coût de ces accidents est élevé.

Beaucoup plus rarement, la traversée d'une zone de turbulences par un aéronef peut endommager sa structure, notamment lors de présence de vents violents dans la zone de turbulences.

Les composantes de vent de direction verticale ont une influence sur l'incidence, donc sur la portance de l'aéronef, et les composantes de direction latérales ont une influence en lacet sur l'aéronef par les évolutions de dérapage sur l'empennage vertical.

La détection de ces hétérogénéités de vent peut permettre soit de préparer l'aéronef à affronter ces difficultés par prises de mesures rapides, soit de déclencher une manoeuvre d'évitement de la zone dangereuse.

Un but de l'invention est de proposer un système de détection et de caractérisation d'anomalies atmosphériques à distance, de fiabilité améliorée et de coût réduit.

Il est proposé, selon un aspect de l'invention, un système de détection et de détermination d'anomalies atmosphériques à distance, muni d'une sonde d'anémométrie à faisceau mobile pour mesurer la projection orthogonale sur l'axe de visée, nommée composante radiale, d'une vitesse relative à distance par rapport à une masse d'air distante, par exemple, par décalage de fréquence Doppler. Le système comprend, en outre, des moyens de détermination d'hétérogénéités de vent à distance, à partir d'au moins deux mesures successives, en un même point distant, de la composante radiale de la vitesse relative du système par rapport à la masse d'air distante, par ladite sonde d'anémométrie, la ligne de visée de ladite sonde d'anémométrie comprenant ledit point distant lors desdites mesures successives.

Un tel système permet, de manière simple et à coût réduit de détecter des hétérogénéités de vent à distance, afin de pouvoir réagir à l'avance.

Selon un mode de réalisation, le système comprend des moyens de mesure d'une vitesse relative locale par rapport à une masse d'air locale, et les moyens de détermination d'hétérogénéités de vent à distance comprennent des moyens d'estimation d'un vecteur représentatif d'anomalies atmosphériques, égal à la somme vectorielle de ladite vitesse relative locale et d'une perturbation aérologique.

Ainsi, on peut obtenir une estimation des variations d'incidence ou de dérapage que va rencontrer l'aéronef afin de les contrer par le braquage des gouvernes adapté.

Dans un mode de réalisation, lesdits moyens d'estimation du vecteur représentatif d'anomalies atmosphériques sont adaptés pour résoudre les équations suivantes à deux variables :

$$\begin{cases} V_{r1} = V^* \cdot \sin(\varphi - \theta_1) \\ V_{r2} = V^* \cdot \sin(\varphi - \theta_2) \end{cases}$$

dans lesquelles :

$V_{r1}$, $V_{r2}$    représentent les deux mesures successives, en un même point distant, de la composante radiale de la vitesse relative du système par rapport à la masse d'air distante;

$\theta_1$, $\theta_2$    représentent les angles respectifs entre la direction de déplacement du système et l'axe de visée de la sonde d'anémométrie lors desdites deux mesures successives ;

$V^*$    est ledit vecteur représentatif d'anomalies atmosphériques; et

$\varphi$    représente l'angle entre l'axe perpendiculaire à la direction de déplacement du système, passant par ledit point distant de mesure, et ledit vecteur représentatif d'anomalies atmosphériques.

De tels calculs limitent l'utilisation de mémoire du système.

Selon un mode de réalisation, le système comprend, en outre, des moyens d'alarme, des moyens de comparaison des valeurs dudit paramètre représentatif d'anomalies atmosphériques et de ladite vitesse relative locale, et des moyens d'activation des moyens d'alarme lorsque lesdites valeurs dudit paramètre représentatif d'anomalies atmosphériques et de ladite vitesse relative locale sont différentes.

Par une simple comparaison de deux valeurs, une alarme peut être déclenchée pour prévenir l'utilisateur, en particulier le pilote d'un aéronef lorsque le système est embarqué à bord.

Dans un mode de réalisation, la durée séparant les deux mesures radiales successives est inférieure à 2 secondes.

Ainsi, on peut obtenir une estimation des variations d'incidence ou de dérapage que va rencontrer l'avion afin de les contrer par la braquage des gouvernes adapté.

Par exemple, ladite sonde d'anémométrie est une sonde à ondes électromagnétiques.

Une telle sonde est souvent présente sur les aéronefs, et peut être utilisée par le présent système, de manière à limiter le coût du système.

Par exemple, ladite sonde d'anémométrie est une sonde optique à laser.

L'utilisation d'une sonde d'anémométrie à ondes laser, ou LIDAR, permet au système de fonctionner de manière précise, même en air clair ou sec, et de ne pas être gêné par des échos parasites à proximité du sol.

Par exemple, ladite sonde d'anémométrie est munie d'une plate-forme orientable ou d'un miroir mobile adapté pour modifier la ligne de visée et rendre le faisceau mobile.

Ainsi on obtient à coût réduit une sonde d'anémométrie dont la ligne de visée passe par le point de mesure lors des mesures successives.

Dans un mode de réalisation, lesdits moyens de mesure d'une vitesse relative locale comprennent une sonde de Pitot, une prise de pression statique, et une sonde de température d'air, situées sur la surface externe de l'aéronef.

De tels éléments de mesure d'une vitesse relative par rapport à l'air local sont de coût réduit, fiables et répandus.

L'invention porte également sur un aéronef comprenant un système embarqué selon l'une des revendications précédentes.

Selon un autre aspect de l'invention, il est également proposé un procédé de détection et de détermination d'anomalies atmosphériques à distance, dans lequel on détermine des hétérogénéités de vent à distance, à partir d'au moins deux mesures successives, en un même point distant, de la composante radiale de la vitesse relative du système par rapport à la masse d'air distante, par une sonde d'anémométrie, la ligne de visée de ladite sonde d'anémométrie comprenant ledit point distant lors desdites mesures successives.

L'invention sera mieux comprise à l'étude de quelques modes de réalisation décrits à titre d'exemples nullement limitatifs et illustrés par les dessins annexés sur lesquels :

- la figure 1 illustre schématiquement un mode de réalisation d'un système selon un aspect de l'invention, embarqué à bord d'un avion ; et
- la figure 2 illustre plus en détail un système selon un aspect de l'invention.

Dans la description qui suit, le système de détection et de détermination d'anomalies atmosphériques à distance, selon un aspect de l'invention, est décrit comme embarqué à bord d'un aéronef, mais, il s'agit d'un exemple nullement limitatif.

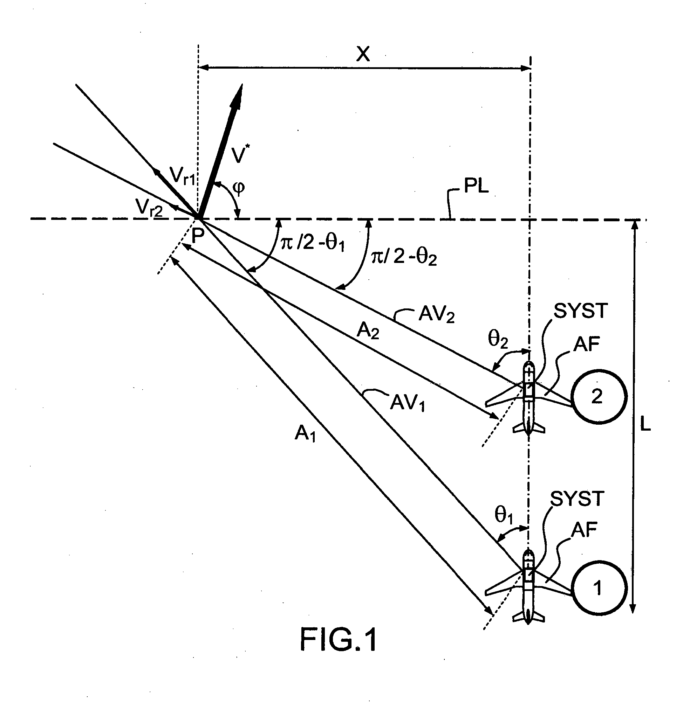

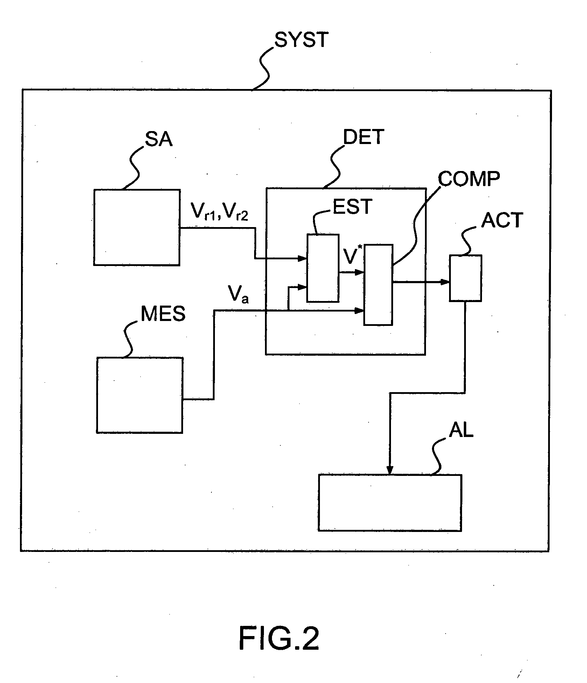

Tel qu'illustré sur les figures 1 et 2, un système de détection et de détermination d'anomalies atmosphériques à distance selon l'invention, est monté à bord d'un aéronef sur la figure 1.

Le système SYST comprend un module de détermination DET d'hétérogénéités de vent à distance, à partir d'au moins deux mesures successives $V_{r1}$, $V_{r2}$, en un même point distant P, de la composante radiale de la vitesse relative du système par rapport à la masse d'air distante, par ladite sonde d'anémométrie SA.

La ligne de visée $AV_1$, $AV_2$ de la sonde d'anémométrie SA comprend, ou passe par ledit point distant P lors des mesures successives des composantes radiales $V_{r1}$, $V_{r2}$. Pour cela, la sonde d'anémométrie SA peut être munie d'une plate-forme orientable ou d'un miroir mobile pour modifier la ligne de visée et rendre le faisceau mobile. Ainsi, le faisceau de la sonde SA peut être mobile en site et en azimut.

Le système SYST est muni d'un module de mesure MES d'une vitesse relative locale $V_a$ par rapport à une masse d'air locale.

Le module de détermination DET d'hétérogénéités de vent à distance comprend un module d'estimation EST d'un vecteur V* représentatif d'anomalies atmosphériques, égal à la somme vectorielle de ladite vitesse relative locale $V_a$ et d'une perturbation aérologique PA.

Le système SYST comprend également un module d'alarme AL, tel un élément sonore ou visuel, un module de comparaison COMP des valeurs du paramètre V* représentatif d'anomalies atmosphériques et de la vitesse relative locale $V_a$, ainsi qu'un module d'activation ACT des moyens d'alarme AL lorsque lesdites valeurs du paramètre V* représentatif d'anomalies atmosphériques et de la vitesse relative locale $V_a$ sont différentes.

Ainsi, lorsque le système est embarqué à bord d'un aéronef, le pilote, ou le centre de commande peut être averti à l'avance de la présence d'une zone à risques.

Le module d'estimation EST est adapté pour résoudre les équations suivantes à deux variables V*, $\varphi$ :

$$\begin{cases} V_{r1} = V^* \cdot \sin(\varphi - \theta_1) \\ V_{r2} = V^* \cdot \sin(\varphi - \theta_2) \end{cases}$$

dans lesquelles :

$V_{r1}$, $V_{r2}$    représentent les deux mesures successives, en un même point distant, de la composante radiale $V_{r1}$, $V_{r2}$ de la vitesse relative du système SYST par rapport à la masse d'air distante;

$\theta_1$, $\theta_2$    représentent les angles respectifs entre la direction de déplacement du système et l'axe de visée de la sonde d'anémométrie lors desdites deux mesures successives $V_{r1}$, $V_{r2}$ ;

V*    est ledit vecteur représentatif d'anomalies atmosphériques; et

$\varphi$    représente l'angle entre l'axe perpendiculaire à la direction de déplacement du système, passant par ledit point distant de mesure, et ledit vecteur V* représentatif d'anomalies atmosphériques.

En effet, on cherche à caractériser une anomalie atmosphérique par le vecteur V*.

V* est en fait est la somme vectorielle de la perturbation aérologique ou la perturbation de vent à identifier, qui est susceptible d'engendrer des mouvements imprévus de l'aéronef en cas de rencontre de cette perturbation, et de la vitesse locale de l'avion $V_a$ par rapport à l'air. Si V* est égale à $V_a$, cela signifie que l'anomalie est nulle, et qu'il n'y pas de turbulence détectée.

A partir de l'aéronef situé à une distance L d'un plan PL perpendiculaire à la trajectoire estimée, on fait une première mesure à une première distance $A_1$ en un point P situé à une distance X de cette trajectoire estimée. Ce point de mesure P est vu sous un angle $\theta_1$. En ce point, la sonde d'anémométrie SA effectue la première mesure de la composante radiale $V_{r1}$ de la vitesse relative du système SYST, ou de l'aéronef AF à bord duquel ce dernier est embarqué, par rapport à la masse d'air distante selon l'axe de visée $AV_1$ de la sonde d'anémométrie SA. La composante radiale est la projection de V* sur l'axe de visée $AV_1$. A un instant ultérieur, la sonde d'anémométrie SA effectue la deuxième mesure de la composante radiale $V_{r2}$ de la vitesse relative du système SYST, ou de l'aéronef AF à bord duquel ce dernier est embarqué, par rapport à la masse d'air distante selon l'axe de visée $AV_2$ de la sonde d'anémométrie SA. La composante radiale est la projection de V* sur l'axe de visée $AV_2$.

L'angle entre le vecteur V* et le plan perpendiculaire à la trajectoire estimée est noté $\varphi$. La trajectoire estimée du système SYST ou de l'aéronef AF embarquant le système SYST est la droite prolongeant le vecteur de la vitesse relative locale $V_a$ par rapport à l'air de l'aéronef AF. Une relation classique de modélisation de vol des avions est utilisée : l'assiette de l'avion ou aéronef AF est égale à la somme de la pente de la trajectoire et de l'incidence de l'avion. L'assiette est fournie par une centrale de calcul d'assiette ou une centrale inertielle de l'avion, ainsi que la pente de la trajectoire, et l'incidence est fournie par une centrale anémométrique.

Sur la figure 1, l'aéronef AF muni du système SYST de détection d'anomalies atmosphériques à distance est représenté dans deux positions successives référencées 1 et 2. La distance séparant ces deux positions successives 1 et 2 est évidemment proportionnelle à la vitesse relative locale $V_a$ de l'aéronef AF par rapport à l'air, $V_a$ et à l'intervalle de temps dt. On suppose la vitesse relative locale $V_a$ de l'aéronef AF par rapport à l'air constante sur l'intervalle de temps dt. L'intervalle de temps dt est préférentiellement inférieur à deux secondes.

Le même point de mesure P est alors vu sous un angle $\theta_2 = \theta_1 + d\theta_1$ et la sonde d'anémométrie SA mesure les deux composantes radiales $V_{r1}$, $V_{r2}$ selon les deux axes de visées $AV_1$ et $AV_2$ aux deux instants successifs, du vecteur V*, considéré comme constant sur l'intervalle de temps dt.

Etant donné que l'on a l'égalité suivante, pour toute composante radiale $V_r$ d'une mesure de la sonde d'anémométrie SA, par projection orthogonale du vecteur V* sur l'axe de visée courant :

$$V_r = V^* . \cos\left(\pi/2 - \theta + \varphi\right) = V^* . \sin(\varphi - \theta)$$

On a donc le système de deux équations à deux inconnues V*, $\varphi$ suivant:

$$\begin{cases} V_{r1} = V^* \cdot \sin(\varphi - \theta_1) \\ V_{r2} = V^* \cdot \sin(\varphi - \theta_2) \end{cases}$$

Ces deux équations à deux inconnues permettent d'estimer V* et $\varphi$, $\theta_1$ et $\theta_2$ étant connus comme étant les deux angles de mesure aux deux instants.

Par soustraction vectorielle de la vitesse relative locale $V_a$, par le module de comparaison COMP, on obtient une estimée de la perturbation aérologique. Si le vecteur V* a varié entre ces deux instants de mesures très proches, même très faiblement, le module d'activation ACT peut activer le module d'alarme AL pour prévenir du danger, en particulier si cette zone n'est pas ponctuelle, c'est-à-dire si le même comportement est détecté sur des points voisins du point P. Le même processus peut être appliqué à d'autres points de l'espace, à la fois dans le plan de mesure PL situé à la distance L de la première position 1 de l'aéronef AF balayé par la sonde d'anémométrie SA à l'aide du déplacement en site et en gisement de l'axe de visée et dans d'autres plans parallèles et plus distants en cas d'utilisation d'une sonde SA de mesures à distance variable par modification de la distance de focalisant et/ou en utilisant un système pulsé. On peut ainsi dresser une cartographie des perturbations aérologiques susceptibles d'affecter l'aéronef.

On peut préférentiellement utiliser une sonde d'anémométrie SA de type sonde optique à laser, qui a pour avantage de fonctionner parfaitement en air clair ou parfaitement pur, et évite l'influence d'échos parasites à proximité du sol.

En variante, la sonde d'anémométrie SA peut être une sonde à ondes électromagnétiques.

La présente invention permet, à coût réduit et avec une fiabilité améliorée, de détecter des anomalies atmosphériques à distance.

### Revendications

1. Système de détection et de détermination d'anomalies atmosphériques à distance (SYST), muni d'une sonde d'anémométrie (SA) à faisceau mobile pour mesurer la projection orthogonale sur l'axe de visée (AV$_1$, AV$_2$), nommée composante radiale, d'une vitesse relative à distance, par rapport à une masse d'air distante par décalage de fréquence Doppler, **caractérisé en ce qu'**il comprend des moyens de détermination (DET) d'hétérogénéités de vent à distance, à partir d'au moins deux mesures successives (V$_{r1}$, V$_{r2}$), en un même point distant (P), de la composante radiale de la vitesse relative du système par rapport à la masse d'air distante, par ladite sonde d'anémométrie (SA), la ligne de visée (AV$_1$, AV$_2$) de ladite sonde d'anémométrie (SA) comprenant ledit point distant (P) lors desdites mesures successives.

2. Système selon la revendication 1, comprenant des moyens de mesure (MES) d'une vitesse relative locale (V$_a$) par rapport à une masse d'air locale, dans lequel les moyens de détermination (DET) d'hétérogénéités de vent à distance comprennent des moyens d'estimation (EST) d'un vecteur (V*) représentatif d'anomalies atmosphériques, égal à la somme vectorielle de ladite vitesse relative locale (V$_a$) et d'une perturbation aérologique (PA).

3. Système selon la revendication 2, dans lequel lesdits moyens d'estimation (EST) du vecteur (V*) représentatif d'anomalies atmosphériques sont adaptés pour résoudre les équations suivantes à deux variables (V*, $\varphi$) :

$$\begin{cases} V_{r1} = V^* \cdot \sin(\varphi - \theta_1) \\ V_{r2} = V^* \cdot \sin(\varphi - \theta_2) \end{cases}$$

dans lesquelles :

V$_{r1}$, V$_{r2}$ représentent les deux mesures successives, en un même point distant, de la composante radiale (V$_{r1}$, V$_{r2}$) de la vitesse relative du système par rapport à la masse d'air distante;

$\theta_1$, $\theta_2$ représentent les angles respectifs entre la direction de déplacement du système et l'axe de visée de la sonde d'anémométrie lors desdites deux mesures successives (V$_{r1}$, V$_{r2}$);

V* est ledit vecteur représentatif d'anomalies atmosphériques; et

$\varphi$ représente l'angle entre l'axe perpendiculaire à la direction de déplacement du système, passant par ledit point distant de mesure, et ledit vecteur (V*) représentatif d'anomalies atmosphériques.

4. Système selon la revendication 2 ou 3, comprenant, en outre, des moyens d'alarme (AL), des moyens de comparaison (COMP) des valeurs dudit paramètre (V*) représentatif d'anomalies atmosphériques et de ladite vitesse relative locale (V$_a$), et des moyens d'activation (ACT) des moyens d'alarme (AL) lorsque lesdites valeurs dudit paramètre (V*) représentatif d'anomalies atmosphériques et de ladite vitesse relative locale (V$_a$) sont différentes.

5. Système selon la revendication 1 ou 2, dans lequel la durée séparant les deux mesures radiales successives (V$_{r1}$, V$_{r2}$), est inférieure à deux secondes.

6. Système selon l'une des revendications 1 à 5, dans lequel ladite sonde d'anémométrie (SA) est une sonde à ondes électromagnétiques.

7. Système selon l'une des revendications 1 à 5, dans lequel ladite sonde d'anémométrie (SA) est une sonde à ondes laser.

8. Système selon l'une des revendications précédentes, dans lequel ladite sonde d'anémométrie (SA) est munie d'une plate-forme orientable ou d'un miroir mobile, adapté pour modifier la ligne de visée et rendre le faisceau mobile.

9. Système selon l'une des revendications 2 à 8, dans lequel lesdits moyens de mesure (MES) d'une vitesse relative locale (V$_a$) comprennent une sonde de Pitot, une prise de pression statique, et une sonde de température d'air, situées sur la surface externe de l'aéronef.

10. Aéronef (AF) comprenant un système embarqué selon l'une des revendications précédentes.

11. Procédé de détection et de détermination d'anomalies atmosphériques à distance, **caractérisé en ce**

qu'il comprend la détermination d'hétérogénéités de vent à distance, à partir d'au moins deux mesures successives, en un même point distant (P), de la composante radiale (V$_{r1}$, V$_{r2}$) de la vitesse relative du système par rapport à la masse d'air distante, par une sonde d'anémométrie (SA), la ligne de visée (AV$_1$, AV$_2$) de ladite sonde d'anémométrie (SA) comprenant ledit point distant (P) lors desdites mesures successives.

**Patentansprüche**

1. System (SYST) zum Ferndetektieren und -ermitteln von atmosphärischen Abweichungen, das mit einer Anemometersonde (SA) mit einem beweglichen Strahl zum Messen der orthogonalen Projektion auf der Sichtachse (AV$_1$, AV$_2$) versehen ist, radiale Komponente genannt, einer fernen relativen Geschwindigkeit in Bezug auf eine ferne Luftmasse durch Doppler-Frequenzverschiebung, **dadurch gekennzeichnet, dass** es Mittel (DET) zum Fernermitteln von Windheterogenitäten auf der Basis von wenigstens zwei aufeinander folgenden Messungen (V$_{r1}$, V$_{r2}$), an einem selben fernen Punkt (P), der radialen Komponente der relativen Geschwindigkeit des Systems in Bezug auf die ferne Luftmasse mittels der Anemometriesonde (SA) umfasst, wobei die Sichtlinie (AV$_1$, AV$_2$) der Anemometersonde (SA) den fernen Punkt (P) während der aufeinander folgenden Messungen umfasst.

2. System nach Anspruch 1, wobei das Mittel (MES) zum Messen einer lokalen relativen Geschwindigkeit (V$_a$) in Bezug auf eine lokale Luftmasse umfasst, wobei das Mittel (DET) zum Fernermitteln von Windheterogenitäten Mittel (EST) zum Schätzen eines Vektors (V*) umfasst, der atmosphärische Abweichungen repräsentiert, die gleich der Vektorsumme der lokalen relativen Geschwindigkeit (V$_a$) und einer aerologischen Störung (PA) ist.

3. System nach Anspruch 2, wobei die Mittel (EST) zum Schätzen des atmosphärische Abweichungen repräsentierenden Vektors (V*) so ausgelegt sind, dass sie die folgenden Gleichungen mit zwei Variablen (V*, $\varphi$) lösen:

$$\begin{cases} V_{r1} = V^{*} \cdot \sin(\varphi - \theta_1) \\ V_{r2} = V^{*} \cdot \sin(\varphi - \theta_2) \end{cases}$$

wobei:

V$_{r1}$, V$_{r2}$ die beiden aufeinander folgenden Messungen, an einem selben fernen Punkt, der radialen Komponente (V$_{r1}$, V$_{r2}$) der relativen Geschwindigkeit des Systems in Bezug auf die ferne Luftmasse repräsentieren;

$\theta_1$, $\theta_2$ die jeweiligen Winkel zwischen der Bewegungsrichtung des Systems und der Sichtachse der Anemometersonde während der beiden aufeinander folgenden Messungen (V$_{r1}$, V$_{r2}$) repräsentieren;

V* der atmosphärische Abweichungen repräsentierende Vektor ist; und

$\varphi$ den Winkel zwischen der Achse lotrecht zur Bewegungsrichtung des Systems repräsentiert, die durch den fernen Messpunkt geht, und wobei der Vektor V* atmosphärische Abweichungen repräsentiert.

4. System nach Anspruch 2 oder 3, das ferner Alarmierungsmittel (AL), Mittel (COMP) zum Vergleichen der Werte des atmosphärische Abweichungen repräsentierenden Parameters (V*) und der lokalen relativen Geschwindigkeit (V$_a$) sowie Mittel (ACT) zum Aktivieren der Alarmierungsmittel (AL) umfasst, wenn die Werte des atmosphärische Abweichungen repräsentierenden Parameters (V*) und der lokalen relativen Geschwindigkeit unterschiedlich sind.

5. System nach Anspruch 1 oder 2, wobei die Zeit zwischen den beiden aufeinander folgenden radialen Messungen (V$_{r1}$, V$_{r2}$) geringer als zwei Sekunden ist.

6. System nach einem der Ansprüche 1 bis 5, wobei die Anemometersonde (SA) eine Elektromagnetische-Wellen-Sonde ist.

7. System nach einem der Ansprüche 1 bis 5, wobei die Anemometersonde (SA) eine Laserwellensonde ist.

8. System nach einem der vorherigen Ansprüche, wobei die Anemometersonde (SA) mit einer orientierbaren Plattform oder einem beweglichen Spiegel versehen ist, der so ausgelegt ist, dass er die Sichtlinie modifiziert und den Strahl beweglich macht.

9. System nach einem der Ansprüche 2 bis 8, wobei das Mittel (MES) zum Messen einer lokalen relativen Geschwindigkeit (V$_a$) ein Staurohr, eine Statischer-Druck-Abgriffstelle und eine Lufttemperatursonde umfasst, die sich auf der Außenfläche eines Luftfahrzeugs befindet.

10. Luftfahrzeug (AF), das ein Bordsystem nach einem der vorherigen Ansprüche umfasst.

11. Verfahren zum Ferndetektieren und -ermitteln von atmosphärischen Abweichungen, **dadurch gekennzeichnet, dass** es das Fernermitteln von Windheterogenitäten auf der Basis von wenigstens zwei aufeinander folgenden Messungen, an einem selben fernen Punkt (P), der radialen Komponente ($V_{r1}$, $V_{r2}$) der relativen Geschwindigkeit des Systems in Bezug auf die ferne Luftmasse mittels einer Anemometersonde (SA) beinhaltet, wobei die Sichtlinie ($AV_1$, $AV_2$) der Anemometersonde (SA) den fernen Punkt (P) während der aufeinander folgenden Messungen umfasst.

**Claims**

1. A system (SYST) for remotely detecting and determining atmospheric deviations, provided with an anemometry probe (SA) with a mobile beam for measuring the orthogonal projection on the axis of sight ($AV_1$, $AV_2$), referred to as radial component, of a remote relative speed in relation to a remote air mass by Doppler frequency shifting, **characterised in that** it comprises means (DET) for remotely determining wind heterogeneities, on the basis of at least two successive measurements ($V_{r1}$, $V_{r2}$), at the same remote point (P), of the radial component of the relative speed of the system in relation to the remote air mass, by means of said anemometry probe (SA), with the line of sight ($AV_1$, $AV_2$) of said anemometry probe (SA) comprising said remote point (P) during said successive measurements.

2. The system according to claim 1, comprising means (MES) for measuring a local relative speed ($V_a$) in relation to a local air mass, wherein said means (DET) for remotely determining wind heterogeneities comprise means (EST) for estimating a vector ($V^*$) representing atmospheric deviations equal to the vector sum of said local relative speed ($V_a$) and an aerological disruption (PA).

3. The system according to claim 2, wherein said means (EST) for estimating said vector ($V^*$) representing atmospheric deviations are designed to work out the following equations with two variables ($V^*$, $\varphi$):

$$\begin{cases} V_{r1} = V^* \cdot \sin(\varphi - \theta_1) \\ V_{r2} = V^* \cdot \sin(\varphi - \theta_2) \end{cases}$$

in which:

V_{r1}, V_{r2} represent the two successive measurements, at the same remote point, of the radial component ($V_{r1}$, $V_{r2}$) of the relative speed of the system in relation to the remote air mass;
$\theta_1$, $\theta_2$ represent the respective angles between the direction of displacement of the system and the axis of sight of the anemometry probe during said two successive measurements ($V_{r1}$, $V_{r2}$);
$V^*$ is said vector representing atmospheric deviations; and
$\varphi$ represents the angle between the axis perpendicular to the direction of displacement of the system, passing through said remote measurement point, and said vector $V^*$ representing atmospheric deviations.

4. The system according to claim 2 or 3, further comprising alarm means (AL), means (COMP) for comparing the values of said parameter ($V^*$) representing atmospheric deviations and said local relative speed ($V_a$) and means (ACT) for activating said alarm means (AL) when said values of said parameter ($V^*$) representing atmospheric deviations and of said local relative speed ($V_a$) are different.

5. The system according to claim 1 or 2, wherein the duration separating the two successive radial measurements ($V_{r1}$, $V_{r2}$) is less than two seconds.

6. The system according to any one of claims 1 to 5, wherein said anemometry probe (SA) is an electromagnetic wave probe.

7. The system according to any one of claims 1 to 5, wherein said anemometry probe (SA) is a laser wave probe.

8. The system according to any one of the preceding claims, wherein said anemometry probe (SA) is provided with an orientable platform or a mobile mirror designed to modify the line of sight and to make the beam mobile.

9. The system according to any one of claims 2 to 8, wherein said means (MES) for measuring a local relative speed ($V_a$) comprise a Pitot probe, a static pressure tap and an air temperature probe located on the external surface of an aircraft.

10. An aircraft (AF) comprising an on-board system according to any one of the preceding claims.

11. A method for remotely detecting and determining atmospheric deviations, **characterised in that** it comprises remotely determining wind heterogeneities on the basis of at least two successive measurements, at the same remote point (P), of the radial component ($V_{r1}$, $V_{r2}$) of the relative speed of the system in relation to the remote air mass, by means of an anemometry probe (SA), with the line of sight ($AV_1$, $AV_2$) of said anemometry probe (SA) comprising said remote point (P) during said successive measurements.

FIG.1

FIG.2

**EP 2 425 262 B1**

## RÉFÉRENCES CITÉES DANS LA DESCRIPTION

**Documents brevets cités dans la description**

- GB 2176965 A